# EUROPEAN PATENT APPLICATION

(11) **EP 2 548 751 A1**
(43) Date of publication of application: **23.01.2013**
(21) Application number: 11756295.9
(22) Date of filing: 15.03.2011
(51) Int. Cl.: B60G 21/055, B05D 3/02, B05D 3/14, C21D 9/08

(54) **METHOD FOR PRODUCING VEHICLE STABILIZER**

(30) Priority: 16.03.2010 JP 2010059611
(71) Applicant: Chuo Hatsujo Kabushiki Kaisha, Nagoya-shi, Aichi 458-8505 (JP)
(72) Inventor: ITO Toru, Nagoya-shi Aichi 458-8505 (JP); UKEI Yoshitaka, Nagoya-shi Aichi 458-8505 (JP)
(74) Representative: Winter, Brandl, Fürniss, Hübner, Röss, Kaiser, Polte - Partnerschaft
(86) International application number: PCT/JP2011/056050
(87) International publication number: WO 2011/115110

(57) **Abstract**

An object of the present application is to provide a method for reducing the time period of a painting step by heating an automobile stabilizer bar by electrical heating. In a method for manufacturing an automobile stabilizer bar, an automobile stabilizer bar having a curved portion and a straight portion is heated by electrical heating. Next, a surface of the heated stabilizer bar is sprayed with paint. The heating step is preferably conducted such that an increasing rate of a surface temperature of the straight portion is 10 to 30 Celsius degrees/sec.

## Description

### TECHNICAL FIELD

The present application relates to a method for manufacturing an automobile stabilizer bar.

### DESCRIPTION OF RELATED ART

A method for manufacturing a stabilizer bar used in a vehicle such as an automobile is disclosed in Japanese Patent Application Publication No. 2006-206999 and Japanese Patent Application Publication No. 2004-193033. In this manufacturing method, steel (material) is subjected to bending and formed into a stabilizer-shape. The formed stabilizer-shaped steel material is then subjected to heat treatment. By subjecting the stabilizer bar to heat treatment, desired mechanical characteristics are imparted thereto. Moreover, Japanese Patent Application Publication No. 2006-206999 describes the use of electrical heating for quenching a stabilizer bar. In addition, Japanese Patent Application Publication No. 2004-193033 describes quenching and tempering a stabilizer bar by electrical heating.

### BRIEF SUMMARY OF THE INVENTION

### Technical Problem

A surface of a stabilizer bar is painted in order to prevent life reduction and property degradation due to corrosion. For the painting, baking finish that is capable of forming a strong painting film is typically performed. In a conventional painting method, a surface of a room-temperature stabilizer bar is first painted, and the stabilizer bar is then heated in a heating furnace to bake the painting onto the surface of the stabilizer bar.

With the conventional painting method described above, since painting is performed on a room-temperature stabilizer bar, a period of time between painting and completion of baking finish is problematically prolonged. Therefore, a method of reducing the period of time between painting and completion of baking finish by preheating the stabilizer bar by electrical heating that is capable of rapid heating and by painting the preheated stabilizer bar may be considered. In order to adopt such a method, a variation in surface temperatures of the stabilizer bar must be kept within an allowable range and a variation in painting quality must also be kept within an allowable range. However, applying electrical heating to a stabilizer bar having a curved portion results in an increased variation in surface temperatures at the curved portion and the variation in painting quality cannot be kept within an allowable range. Therefore, so far, the method of preheating a stabilizer bar by electrical heating and painting the stabilizer bar has not been realized.

An object of the present application is to provide a technique that enables a stabilizer bar to be heated by electrical heating while controlling an increasing rate of a temperature of the stabilizer bar to suppress a variation in surface temperatures and, in turn, enabling a reduction in a period of time between painting and baking finish while maintaining painting quality.

### Solution to the Technical Problem

The present specification discloses a method for manufacturing an automobile stabilizer bar having a curved portion and a straight portion. This method comprises a heating step and a spraying step. In the heating step, the automobile stabilizer bar is heated by electrical heating. In the spraying step, a surface of the heated stabilizer bar is sprayed with paint. Further, the heating step is conducted such that an increasing rate of a surface temperature of the straight portion is 10 to 30 Celsius degrees/sec.

An experiment carried out by the present inventors has revealed that a variation in surface temperatures of a stabilizer bar cannot be kept within an allowable range when, in the electrical heating step, the increasing rate of temperature (hereinafter referred to as a base surface temperature) of the straight portion (in other words, a portion other than the curved portion) of the stabilizer bar exceeds 30 Celsius degrees/sec. In addition, when the increasing rate of the base surface temperature of the stabilizer bar is less than 10 Celsius degrees/sec, preheating of the stabilizer bar takes a long period of time. With the manufacturing method described above, since the increasing rate of the base surface temperature of the stabilizer bar is set to the range of 10 to 30 Celsius degrees/sec, the variation in the surface temperatures of the stabilizer bar in the painting step is kept within the allowable range, thereby enabling variation in painting quality to be kept within an allowable range. In addition, since the stabilizer bar is preheated by electrical heating, the period of time between painting and conclusion of baking finish can be reduced.

In the method described above, the heating step may comprise a first step of increasing the base surface temperature of the stabilizer bar to a predetermined temperature (e.g., a baking finish temperature of paint), and a second step of maintaining the base surface temperature of the stabilizer bar at the predetermined temperature. In this case, it is preferred that a time period of the second step may be equal to or less than 10 seconds. According to this configuration, by providing the second step, homogenization of the surface temperature of the stabilizer bar can be achieved. Further, setting the second step to 10 seconds or less prevents the electrical heating step from becoming prolonged.

It is effective that the above-described method is used for manufacturing a stabilizer bar which has a hollow cross section. That is, in the stabilizer bar having the hollow cross section, a thickness of an inner side of the curved portion is different from a thickness of an outer side of the curved portion, thereby the variation in surface temperatures is likely to occur between the inner side and the outer side of the curved portion. Thus, since the above-described manufacturing method can suppress the variation in the surface temperatures, the above-described method is preferable as a manufacturing method for the stabilizer bar having the hollow cross section. Here, the "inner side" of the curved portion refers to a side to which a compressive stress is applied in a bending step for forming the curved portion, and the "outer side" of the curved portion refers to a side to which a tensile stress is applied in the bending step for forming the curved portion.

Further, in the above-described method, it is preferable that an inner surface of the curved portion may be cooled during the electrical heating step. By cooling the inner side of the curved portion, the variation in the surface temperatures between the inner side and the outer side of the curved portion can be further suppressed.

### BRIEF DESCRIPTION OF DRAWINGS

FIG. 1 is a diagram illustrating a schematic configuration of a stabilizer bar according to an embodiment.
FIG. 2 is a flowchart partially illustrating manufacturing steps of a stabilizer bar.
FIG. 3 is a diagram illustrating an example of a temperature profile in an electrical heating step.
FIG. 4A is a diagram schematically illustrating a cross section of a straight portion (a portion other than a curved portion).
FIG. 4B is a diagram schematically illustrating a cross section of a curved portion.
FIG. 5 is a first graph illustrating a relationship between an increasing rate of a temperature in an electrical heating step and a temperature of a curved portion of a stabilizer bar.
FIG. 6 is a second graph illustrating a relationship between an increasing rate of a temperature in an electrical heating step and a temperature of a curved portion of a stabilizer bar.

### DETAILED DESCRIPTION OF INVENTION

A method for manufacturing a stabilizer bar according to the present embodiment will be described. First, a stabilizer bar that is manufactured by the manufacturing method according to the present embodiment will be described. A stabilizer bar 10 is to be mounted on an undercarriage of an automobile and is formed by rod-like steel material (e.g., SUP9 (Japanese Industrial Standards)). Steel material having a solid cross section or steel material having a hollow cross section (so called pipe materials such as STKM13A and STKM15A (Japanese Industrial Standards)) can be used as the steel material for the stabilizer bar 10. The automobile stabilizer bar 10 may typically be adapted so as to have an outside diameter of 20 to 30 mm. In addition, when using a pipe material as the stabilizer bar 10, a thickness of the pipe material may be set to 4 to 8 mm.

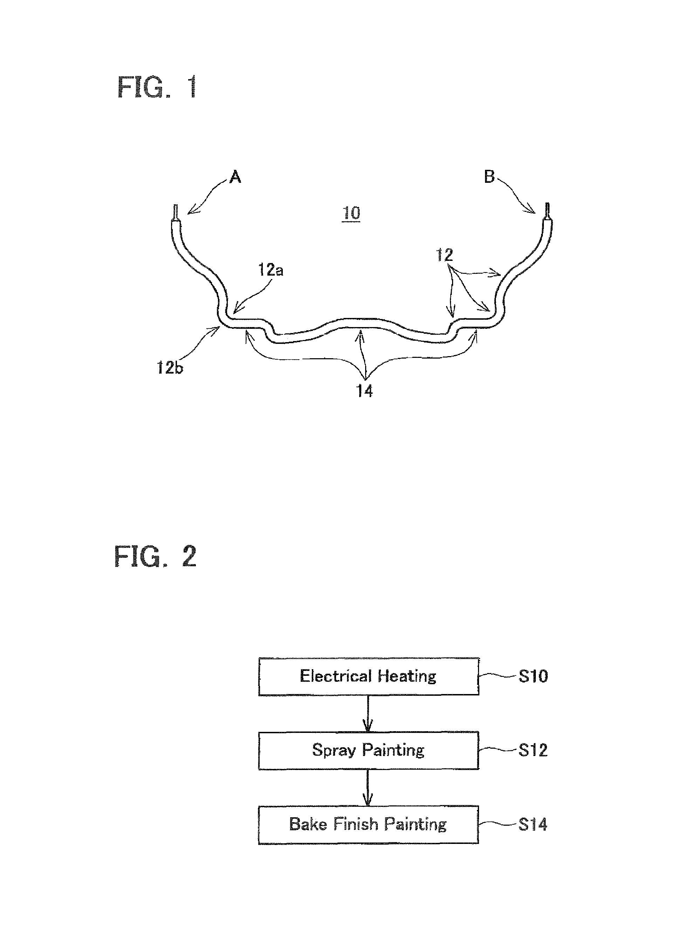

As illustrated in FIG. 1, mounting parts A and B are formed at both ends of the stabilizer bar 10, and a plurality of curved portions 12 and a plurality of straight portions 14 are formed between the mounting parts A and B. The mounting parts A and B are processed into flat plate shapes and each has a bolt hole formed at their respective center. The curved portion 12 is a portion where an axis line thereof is bent. The straight portion 14 is a portion where an axis line thereof is not bent. The curved portions 12 are appropriately provided for purposes such as avoiding interference of the stabilizer bar 10 with other parts of the automobile (a shaft, an engine, and the like). With the automobile stabilizer bar 10, a curvature radius of the curved portion 12a is typically set to 30 to 80 mm.

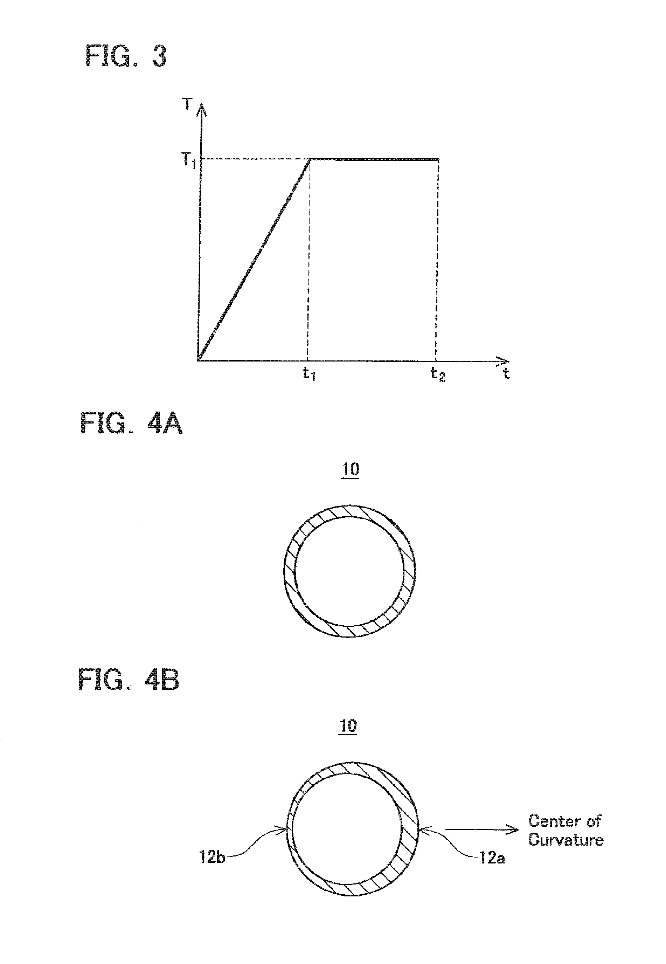

The curved portion 12 is formed by cold or warm bending. Therefore, unlike a portion other than the curved portion 12 (i.e., the straight portion 14), a cross-sectional shape of the curved portion 12 is deformed by bending. As a result, in an electrical heating step to be described later, a variation in surface temperatures is likely to occur between an inner side and an outer side of the curved portion 12. Particularly, in a case where a pipe material is used as the stabilizer bar 10 (i.e., in a case where the stabilizer bar 10 has a hollow cross section), thicknesses of the curved portion 12 vary between the inner side and the outer side. More specifically, during bending for forming the curved portion 12, a compressive stress is applied to an inner side 12a and a tensile stress is applied to an outer side 12b of the curved portion 12 (refer to FIG. 1). As a result, as illustrated in FIG. 4B, the inner side 12a of the curved portion 12 becomes thick-walled and the outer side 12b of the curved portion 12 becomes thin-walled. On the other hand, as illustrated in FIG. 4A, a thickness of the portion other than the curved portion 12 (the straight portion 14) is approximately constant across an entire circumference. Moreover, as is apparent from FIGS. 1 and 4B, the inner side of the curved portion 12 can otherwise be referred to as a side of a center of curvature of the curved portion, and the outer side of the curved portion 12 can otherwise be referred to as a side opposite to the center of curvature of the curved portion.

When mounting the stabilizer bar 10 described above to an automobile, the mounting parts A and B at both ends of the stabilizer bar 10 are fixed to left and right wheels and a center of the stabilizer bar 10 is fixed to a vehicle body. Due to the stabilizer bar 10 mounted to the automobile in this manner, rolling during turning of the automobile can be suppressed and running stability of the automobile can be improved.

A method for manufacturing the stabilizer bar 10 will now be described. The method for manufacturing the stabilizer bar 10 comprises a first forming step in which mounting parts are formed by subjecting both ends of a steel material to forging or the like, a second forming step in which the steel material is subjected to cold or warm bending to form a stabilizer bar shape, a heat treating step in which the formed stabilizer-shaped steel material is subjected to heat treatment, and a bake finishing step in which the heat-treated steel material is painted. Since the first and second forming steps and the heat treating step can be performed in the same manner as is conventional, a detailed description thereof will be omitted. Hereinafter, the bake finishing step will be described in detail.

As illustrated in FIG. 2, in the bake finishing step, the stabilizer bar 10 is first subjected to electrical heating (S10). In the electrical heating step in S10, the mounting part A on one end of the stabilizer bar 10 is clamped by one electrode, the mounting part B on another end of the stabilizer bar 10 is clamped by another electrode, and a voltage is applied between both electrodes. Accordingly, a current flows from one end to the other end of the stabilizer bar 10 and the stabilizer bar 10 is heated by a resulting Joule heat. A heating amount of the stabilizer bar 10 can be controlled by an amount of current flowing through the stabilizer bar 10.

In the electrical heating step, as illustrated in FIG. 3, a first step (0 to t₁) where heat is applied until a base surface temperature of the stabilizer bar 10 reaches a predetermined temperature T₁, and a second step (t₁ to t₂) where the base surface temperature of the stabilizer bar 10 is maintained at the predetermined temperature T₁ may be executed. In this case, the "base surface temperature" of the stabilizer bar 10 refers to a surface temperature at a point appropriately set at the portion other than the curved portion 12 (i.e., the straight portion 14) of the stabilizer bar 10. In other words, the straight portion 14 is not affected by bending in the second forming step described above and, as illustrated in FIG. 4A, the thickness of its cross section is constant in a circumferential direction. Furthermore, in the electrical heating, the current flows in an axial direction of the stabilizer bar 10 and an amount of current or, in other words, a heating amount does not vary in the axis direction. For this reason, the surface temperature of the straight portion 14 remains approximately constant in the circumferential direction and in the axial direction. Therefore, in the present embodiment, the electrical heating amount applied to the stabilizer bar 10 is controlled using the surface temperature of the point set on the straight portion 14 of the stabilizer bar 10 as the base surface temperature. As described above, since the cross-sectional shape of the curved portion 12 varies due to bending, the variation in the surface temperatures is likely to occur between the inner side and the outer side of the curved portion 12 in the electrical heating step. In particular, in an example illustrated in FIG. 4B where a pipe material is used as the stabilizer bar 10, the inner side of the curved portion 12 becomes thick-walled while the outer side of the curved portion 12 becomes thin-walled. Therefore, in the electrical heating step, the surface temperature of the inner side of the curved portion 12 becomes higher than the surface temperature of the outer side of the curved portion 12.

The predetermined temperature T₁ described above can be set based on a baking finish temperature range of paint that is sprayed in a next step (S14). For example, when the baking finish temperature range of paint is 180 to 220 Celsius degrees, the predetermined temperature T₁ can be set to 200 Celsius degrees. In addition, the predetermined temperature T₁ can be decided in consideration of a transportation time from an electrical heating facility to a painting facility. In other words, when there is a long transportation time from the electrical heating facility to the painting facility, the predetermined temperature T₁ can be set to a temperature that is higher than an upper limit of the baking finish temperature range.

Furthermore, the first step described above is controlled so that an increasing rate of the base surface temperature of the stabilizer bar 10 is 10 to 30 Celsius degrees/sec. This is because an increasing rate of the base surface temperature of under 10 Celsius degrees/sec results in a longer period of time required for the surface temperature of the stabilizer bar 10 to reach the predetermined temperature T₁ (e.g., a baking finish temperature). In addition, the increasing rate of the base surface temperature of the stabilizer bar 10 is set equal to or less than 30 Celsius degrees/sec because an increasing rate exceeding 30 Celsius degrees/sec causes the variation in the surface temperatures of the stabilizer bar 10 after the electrical heating to exceed an allowable range. Therefore, by heating in the range described above, the stabilizer bar 10 can be heated to the predetermined temperature T₁ while keeping the variation in the surface temperatures of the stabilizer bar 10 within the allowable range.

Moreover, in the first step, the inner side 12a of the curved portion 12 may be cooled locally. Accordingly, even if the increasing rate of the base surface temperature of the stabilizer bar 10 is increased (e.g., to 20 Celsius degrees/sec or greater), a difference between the surface temperature of the inner side 12a and the surface temperature of the outer side 12b of the curved portion 12 can be kept within an allowable range. Moreover, methods such as spraying air or mist on a portion to be cooled or using a cooling metal can be adopted for localized cooling.

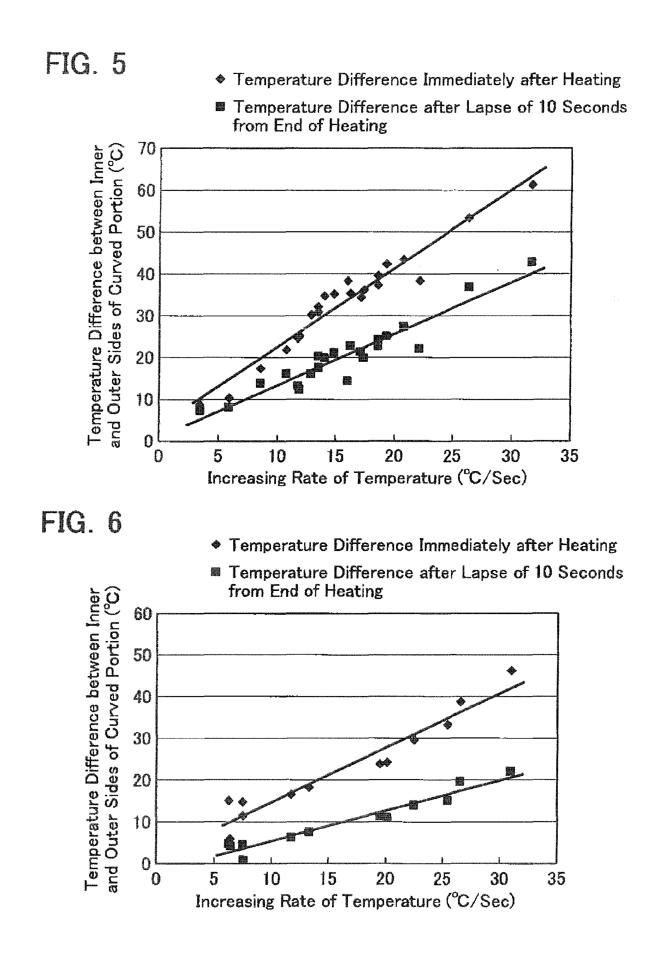

FIGS. 5 and 6 illustrate results of measurements of the temperature difference between the inner side and the outer side of the curved portion 12 while varying the increasing rate of the temperature (the increasing rate of the base surface temperature) of the stabilizer bar 10. Temperatures were measured on a plurality of types of stabilizer bars formed from pipe materials with outer diameters of 22 to 28 mm and thicknesses of 5.0 to 6.0 mm. In addition, temperatures were measured at curved portions having curvature radii of 30 to 80 mm. Furthermore, electrical heating was performed with the predetermined temperature T₁ set to 200 Celsius degrees. Temperatures were measured immediately after end of heating and after a lapse of 10 seconds from the end of heating. Temperatures were measured after the lapse of 10 seconds in consideration of 10 seconds as a period of time required for transporting the stabilizer bar from an electrical heating device to a spray-painting device. Therefore, if the difference in the surface temperatures after the lapse of 10 seconds from the end of heating is within the allowable range, then painting quality is to also fall within an allowable range. Although the allowable temperature range for baking finish is normally around 40 Celsius degrees, from an industrial perspective, the temperature difference must be kept around 20 Celsius degrees in consideration of painting quality. Therefore, if the difference in the surface temperatures after the lapse of 10 seconds from the end of heating is equal to or below 20 Celsius degrees, then painting quality is within the allowable range. FIG. 5 illustrates a result of measurement in a state where the inner side of the curved portion is not cooled, and FIG. 6 illustrates a result of measurement in a state where the inner side of the curved portion is cooled by an air jet. As illustrated in FIG. 5, in the state where the inner side of the curved portion is not cooled, it was possible to hold the temperature difference between the inner side and the outer side of the curved portion to 20 Celsius degrees or lower by setting the increasing rate of the temperature to 15 Celsius degrees/sec or less. In addition, as illustrated in FIG. 6, in a state where the inner side of the curved portion is cooled, it was possible to hold the temperature difference between the inner side and the outer side of the curved portion to 20 Celsius degrees or lower by setting the increasing rate of the temperature to 30 Celsius degrees/sec or less. As is apparent from the results illustrated in FIGS. 5 and 6, it was confirmed that the temperature difference between the inner side and the outer side of the curved portion 12 cannot be kept within the allowable range if the increasing rate of the temperature exceeds 30 Celsius degrees/sec.

In the second step performed following the first step described above, the amount of current flowing through the stabilizer bar 10 is controlled so that the base surface temperature of the stabilizer bar 10 is maintained at the predetermined temperature T₁. For example, the surface temperature of the stabilizer bar 10 is measured by a thermocouple, a thermograph, or the like and the amount of current is controlled based on the measured surface temperature. Alternatively, the base surface temperature of the stabilizer bar 10 can be maintained at a constant temperature by switching the amount of current set in advance. By providing the second step, homogenization of the temperature of the entire stabilizer bar 10 can be achieved. Moreover, the period of time (t₁ to t₂) in which the second step is executed is favorably set to a range of 0 to 10 seconds. Specifically, in the first step, the predetermined temperature T₁ is set and, at the same time, the increasing rate of the temperature of the stabilizer bar 10 is limited to 10 to 30 Celsius degrees/sec. Therefore, the period of time in which the second step is executed may be appropriately decided depending on a period of time allotted to the electrical heating step. For this reason, the second step may be performed for 0 seconds if only a short period of time is allotted to the electrical heating step. In addition, setting the second step to 10 seconds or less prevents the electrical heating step from becoming prolonged.

After the electrical heating step is concluded, the paint is sprayed onto the electrical-heated stabilizer bar 10 (S14) and the paint sprayed onto the surface of the stabilizer bar 10 is then baked (S16). A paint spraying step and a bake finish step can be performed in the same manner as is conventional. In the present embodiment, since the stabilizer bar 10 has been preheated in the electrical heating step, the paint sprayed onto the surface of the stabilizer bar 10 can be baked in a short period of time.

As described in detail above, with the method for manufacturing the stabilizer bar 10 according to the present embodiment, the temperature difference between the inner side and the outer side of the curved portion 12 can be kept within the allowable range by setting the increasing rate of the temperature of the stabilizer bar 10 in the electrical heating step to 30 Celsius degrees/sec or lower. On the other hand, by setting the increasing rate of the temperature of the stabilizer bar 10 to 10 Celsius degrees/sec or higher, a prolonged electrical heating step can be avoided. Therefore, the stabilizer bar 10 can be painted after heating by electrical heating, and the period of time until conclusion of baking finishing can be reduced.

Moreover, in the embodiment described above, both ends of the stabilizer bar 10 are clamped by electrodes and a current is applied between the both ends of the stabilizer bar. However, a heating amount may be adjusted to prevent an occurrence of a variation in surface temperatures by splitting the stabilizer bar in an axial direction and applying currents to each split section.

While examples of the present invention have been described in detail, such examples are merely illustrative and are not intended to limit the scope of claims. Techniques described in the scope of claims include various modifications and changes of the specific examples illustrated above.

It is to be understood that the technical elements described in the present specification and the drawings exhibit technical usefulness solely or in various combinations thereof and shall not be limited to the combinations described in the claims at the time of filing. Furthermore, the techniques illustrated in the present specification and the drawings are to achieve a plurality of objectives at the same time, whereby technical usefulness is exhibited by attaining any one of such objectives.

## Claims

1. A method for manufacturing an automobile stabilizer bar, the method comprising steps of:
(a) heating an automobile stabilizer bar by electrical heating, the stabilizer bar having a curved portion and a straight portion; and
(b) spraying a surface of the heated stabilizer bar with paint,
wherein the step (a) is conducted such that an increasing rate of a surface temperature of the straight portion is 10 to 30 Celsius degrees/sec.

2. The method as in claim 1, wherein the step (a) comprises steps of:
(a1) increasing the surface temperature of the straight portion to a predetermined temperature, and
(a2) maintaining the surface temperature of the straight portion at the predetermined temperature,
wherein a time period of the step (a2) is equal to or less than 10 seconds.

3. The method as in claim 1 or 2, wherein the stabilizer bar has a hollow cross section.

4. The method as in claim 3, wherein an inner surface of the curved portion is cooled during the step (a).
